# EUROPEAN PATENT APPLICATION

(11) **EP 1 788 540 A1**
(43) Date of publication of application: **23.05.2007**
(21) Application number: 06024038.9
(22) Date of filing: 20.11.2006
(51) Int. Cl.: G09B 23/28

(54) **Medical simulation system and computer program**

(30) Priority: 21.11.2005 JP 2005336379
(71) Applicant: SYSMEX CORPORATION, Kobe-shi, Hyogo 651-0073 (JP)
(72) Inventor: Kouchi, Yasuhiro, Chuo-ku Kobe-shi Hyogo 651-0073 (JP); Saitou, Takeo, Chuo-ku Kobe-shi Hyogo 651-0073 (JP); Seike, Masayoshi, Chuo-ku Kobe-shi Hyogo 651-0073 (JP); Takahata, Takayuki, Chuo-ku Kobe-shi Hyogo 651-0073 (JP)
(74) Representative: HOFFMANN EITLE

(57) **Abstract**

A medical simulation system includes a biological response inputting section that receives input of biological response information indicating an actual biological response of biological body, a biological model generating section that generates a biological model for reproduction of simulated response simulating the actual biological response, a pathologic condition characteristics acquiring section that acquires pathologic condition characteristics information indicating characteristics of pathologic condition of the biological body based on the generated biological model, and an outputting section that outputs the biological response information and the pathologic condition characteristics information.

## Description

### FIELD OF THE INVENTION

The present invention relates to a medical simulation system used for supporting examination of diabetes or the like, and to a computer program thereof.

### BACKGROUND

For treatment of disease, generally, a variety of tests are carried out on a patient in addition to interview made by a physician. Under existing circumstances, a physician selects therapeutic strategy based on test results and clinical presentation by the seat-of-the-pants approach.

Therefore, if information which is useful for examination is provided by a computer, examination by a physician would be effected more appropriately. As a system that supports examination, there are known systems that predict blood glucose level as described in US Patent Nos. 6,421,633 and 5,971,922. These systems support examination by predicting change in blood glucose level of a patient and providing a physician with a predicted blood glucose level.

For selecting an appropriate therapeutic method, it is desired for a physician to properly grasp the factors constituting causes of various conditions of disease. Properly grasping factors and conducting therapy for improving the factors would realize more appropriate therapy. However, the data that is available to a physician for grasping factors is no more than test values obtainable by testing of the patient. Although a physician can grasp factors only from test results for some diseases, it may significantly difficult to properly grasp factors from test values for some diseases.

For example, in the case of diabetes, "blood glucose level" is used as an index representing the degree of the disease. However, the "blood glucose level" is merely a result, and it is difficult to accurately grasp the causative pathogenic conditions such as insufficient insulin secretion, peripheral insulin resistance, hepatic glucose incorporation deterioration, and increase in hepatic glucose release resulting therefrom based on the clinical representation as described above.

Therefore, it is still difficult to accurately determine a pathologic condition of a patient only by provision of predicted value of blood glucose level as described in Patent Nos. 6, 421, 633 and 5,971,922. In diabetes, cardiac diseases and the like, a specialty physician usually determines a pathologic condition of a patient with the use of test results of, e.g., oral glucose tolerance test, electrocardiogram, measurements of blood pressure and pulse rate, and blood test. However, it is difficult for a physician of other specialty to accurately determine the pathogenic condition from such test results because abundant experience is required for such determination. In view of this, there is a need for a system useful for training inexperienced physicians and physicians of other specialty so that they can accurately determine a pathologic condition from test results.

### SUMMARY

The scope of the present invention is defined solely by the appended claims, and is not affected to any degree by the statements within this summary.

The first aspect of the present invention relates to a medical simulation system comprising:
biological response inputting means for receiving input of biological response information indicating biological response of a biological body;
biological model generating means for generating a biological model which generates a simulated response simulating the biological response;
pathologic condition characteristics acquiring means for acquiring pathologic condition characteristics information indicating pathologic condition characteristics of the biological body based on the generated biological model; and
outputting means for outputting the biological response information and the pathologic condition characteristics information.

The second aspect of the present invention relates to a medical simulation system comprising:
pathologic condition characteristics inputting means for receiving input of pathologic condition characteristics information indicating characteristics of pathologic condition of a biological body;
simulated response acquiring means for generating a biological model reflecting the inputted characteristics of pathologic condition and acquiring simulated response information based on the biological model; and
outputting means for outputting the pathologic condition characteristics information and the simulated response information.

The third aspect of the present invention relates to a computer program comprising:
a program code for receiving input of biological response information indicating biological response of a biological body by an input device;
a program code for generating a biological model for reproduction of a simulated response simulating the biological response;
a program code for acquiring pathologic condition characteristics information indicating characteristics of pathological condition of the biological body based on the biological model; and
a program code for displaying the biological response information and the pathologic condition characteristics information in a display.

The fourth aspect of the present invention relates to a computer program comprising:
a program code for receiving input of pathologic condition characteristics information indicating characteristics of pathological condition of a biological body by an input device;
a program code for generating a biological model reflecting the inputted characteristics of pathologic condition, and acquiring simulated response information based on the biological model; and
a program code for displaying the pathologic condition characteristics information and the simulated response information in a display.

### BRIEF DESCRIPTION OF THE DRAWINGS

Fig. 1 is a system construction view of a medical simulation system;
Fig. 2 is a block diagram showing a hardware construction of a server;
Fig. 3 is a block diagram showing overall construction of a biological model;
Fig. 4 is a block diagram showing a construction of pancreas model of the biological model;
Fig. 5 is a block diagram showing a construction of a hepatic model of the biological model;
Fig. 6 is a block diagram showing a construction of insulin kinetics model of the biological model;
Fig. 7 is a block diagram showing a construction of a peripheral tissue model of the biological model;
Fig. 8 is a flowchart showing procedure of a parameter set generation process;
Fig. 9 (a) is measured OGTT time-series data of blood glucose level;
Fig. 9 (b) is measured OGTT time-series data of blood insulin concentration;
Fig. 10 is a construction view of a template database;
Fig. 11(a) is template data of blood glucose level;
Fig. 11(b) is template data of insulin concentration;
Fig. 12(a) is a diagram showing an error sum of OGTT time-series data against a template of blood glucose level;
Fig. 12(b) is a diagram showing an error sum of OGTT time-series data against a template of insulin concentration;
Fig. 13 shows an operational screen of system;
Fig. 14 shows an OGTT data input screen;
Fig. 15 shows an operational screen in which an OGTT test result is displayed;
Fig. 16 is a view showing a pathologic condition analysis result display part (before analysis) in the operational screen;
Fig. 17 is a view showing a pathologic condition analysis result display part (during analysis) in the operational screen;
Fig. 18 is a view showing a pathologic condition analysis result display part (after analysis) in the operational screen;
Fig. 19 shows a prescription input screen;
Fig. 20 shows an operational screen after completion of analysis of pathologic condition and after input of prescription;
Fig. 21 shows an operational screen showing input of characteristics of pathologic condition; and
Fig. 22 is a modified example of radar chart showing pathologic condition characteristics information.

### DETAILED DESCRIPTION OF THE EMBODIMENT

Embodiments of a medical simulation system is described hereinafter with reference to drawings.

### [System overall construction]

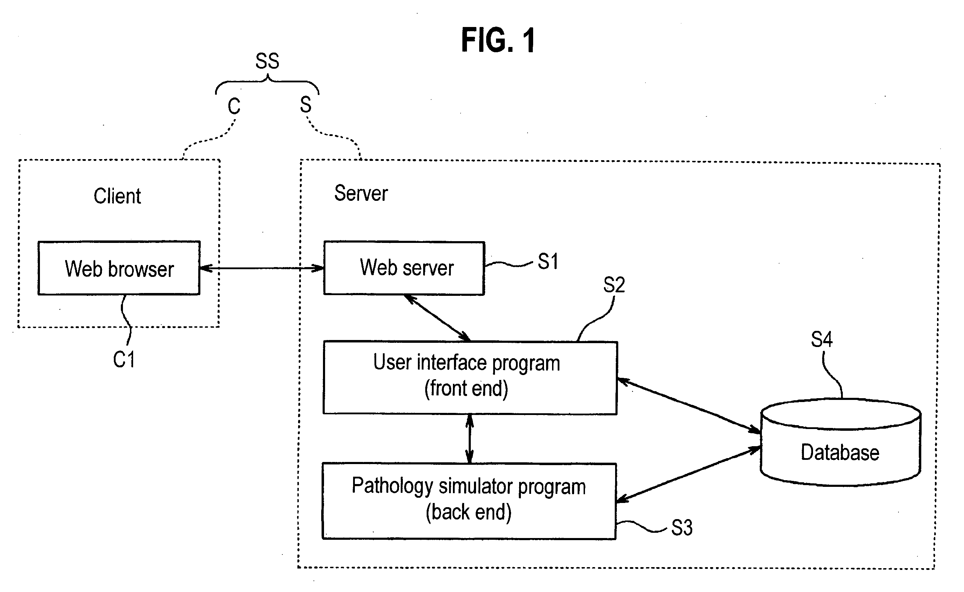

Fig. 1 is a system construction view when a medical simulation system SS is configured as a server client system.

The system SS includes a server S having a function of a Web server S1, and a client terminal C connected to the server S via network. The client terminal C is used by a user such as physician. The client terminal C has a Web browser C1. The Web browser C1 functions as a user interface of the system SS, and a user is allowed to make input or required operation on the Web browser C1. Further, to the Web browser C1, a screen generated in the server S and transmitted is outputted.

The server S has a function of the Web server S1 that receives access from the Web browser C1 of the client terminal C. Further, in the server S, a user interface program S2 for generating a user interface screen displayed in the Web browser C1 is mounted in a computer-executable manner. The user interface program S2 has a function of generating a screen to be displayed in the Web browser C1 and transmitting it to the client terminal C, and receiving information inputted on the Web browser C1 from the client terminal C. In the client terminal C, Java (TM) applet or the like program for realizing the function of generating a part or the whole of the screen to be displayed in the Web browser C1 may be downloaded from the server S, and a part or the whole of the screen is generated and displayed in the screen of the Web browser C1.

Further, in the server S, a pathogenic condition simulator program S3 is mounted in a computer-executable manner. The pathogenic condition simulator program S3 is provided for conducting simulation concerning disease based on the biological model as will be describe later. Further, the server S is provided with a database S4 having various data such as test results of a patient. Data inputted to the system SS, data generated in the system, and other data is stored in this database S4.

As described above, the server S has a function of Web server, an interface (screen) generating function, and a function of pathologic condition simulator. In Fig. 1, a server client system which is connected via network is shown as a construction example of medical simulation system, however, the present system may be constructed in a single computer.

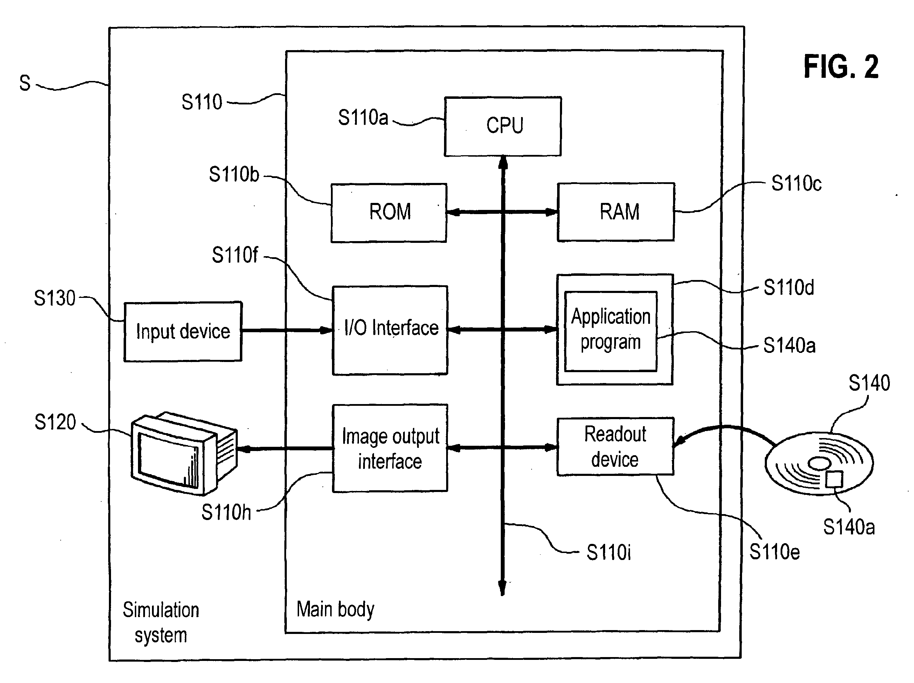

Fig. 2 is a block diagram showing hardware construction of the server S. The server S is composed of a computer primarily comprising a main body S110, a display S120, and an input device S130. The main body S110 comprises a CPU S110a, a ROM S110b, a RAM S110c, a hard disk S110d, a readout device S110e, an input/output interface S110f, and an image output interface S110h. The CPU S110a, the ROM S110b, the RAM S110c, the hard disk S110d, the readout device S110e, the input/output interface S110f, and the image output interface S110h are data-communicably connected by a bus S110i.

The CPU S110a is capable of executing a computer program recorded in the ROM S110b and a computer program loaded in the RAM S110c. And the CPU S110a executes an application program 140a such as the above programs S2, S3 to realize each function block as described later, thereby the computer functions as the system SS.

The ROM S110b comprises mask ROM, PROM, EPROM, EEPROM, etc. and is recoded with computer programs executed by the CPU S110a and data used for the programs.

The RAM S110c comprises SRAM, DRAM, etc. The RAM S110c is used to read out computer programs recorded in the ROM S110b and the hard disk S110d. And the RAM S110c is used as a work area of the CPU S110a when these computer programs are executed.

The hard disk S110d is installed with an operating system, an application program, etc., various computer programs to be executed by the CPU S110a, and data used for executing the computer programs. The programs S2, S3 are also installed in this hard disk S110d.

The readout device S110e which comprises a flexible disk drive, a CD-ROM drive or DVD-ROM drive is capable of reading out a computer program or data recorded in a portable recording media S140. And the portable recordingmedia S140 stores the application program S140a (S2, S3) to function as a system of the present invention. The computer reads out the application program S140a related to the present invention from the portable recording media S140 and is capable of installing the application program S140a in the hard disk S110d.

In addition to that said application program S140a is provided by the portable recording media S140, said application program S140a may be provided through an electric communication line (wired or wireless) from outside devices which are communicably connected to the computer via said electric communication line. For example, said application program S140a is stored in a hard disk in an application program providing server computer on the Internet to which the computer accesses and said application program S140a may be downloaded and installed in the hard disk S110d.

The hard disk S110d is installed with an operating system which provides a graphical user interface environment, e.g. Windows (Registered trademark) manufactured by US Microsoft Corp. In the explanation hereinafter, the application program S140a (S2, S3) related to this embodiment shall operate on said operating system.

The input/output interface S110f comprises a serial interface, e.g. USB, IEEE1394, RS-232C, etc. ; aparallel interface, e.g. SCSI, IDE, IEEE1284, etc.; and an analog interface, e.g. D/A converter, A/D converter, etc. The input/output interface S110f is connected to the input device 130 comprising a keyboard and a mouse and users can input data into the computer using the input data device 130.

The image output interface S110h is connected to the display S120 comprising LCD, CRT or the like so that picture signals corresponding to image data provided from the CPU S110a are output to the display S120. The display S120 displays a picture (screen) based on input picture signals.

The hardware construction of the client terminal C is substantially equal to the hardware construction of the server S.

### [Biological model in simulation system]

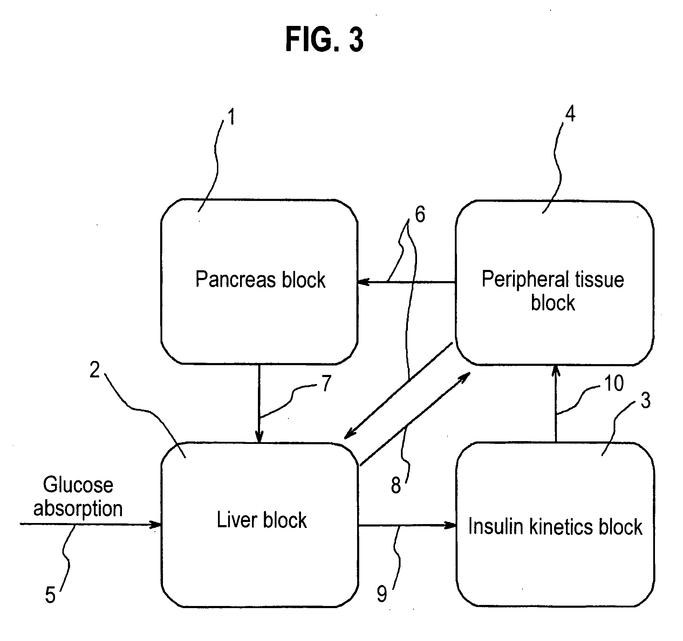

Fig. 3 is a block diagram showing the overall construction of one example of a biological model used in the pathogenic condition simulator program S3 of the system SS according to the present invention. The biological model, in particular, simulates biological organs associated with diabetes, and comprises a pancreas block 1, a hepatic block 2, an insulin kinetics block 3, and a peripheral tissue block 4.

Each block 1, 2, 3, 4 has input and output. As to the pancreas block 1, a blood glucose level 6 is set as input and an insulin secretion rate 7 is set as output to other blocks. As to the hepatic block 2, a glucose absorption 5 from digestive tract, a blood glucose level 6 and an insulin secretion rate 7 are set as input and net glucose release 8 and post liver insulin 9 are set as output to other blocks. As to the insulin kinetics block 3, post liver insulin 9 is set as input and peripheral tissue insulin concentration 10 is set as output to other blocks. As to the peripheral tissue block 4, a net glucose release 8, and insulin concentration 10 in the peripheral tissue are set as input and a blood glucose level 6 is set as output to other blocks.

Glucose absorption 5 is data provided from outside of the biological model. In the present embodiment, as to data concerning glucose absorption, predetermined values are stored in advance depending on the kind of the inputted test data to be inputted (biological response). Further, the function blocks 1 to 4 are each realized by the CPU in the server 2 executing the simulator program.

Next, the above-mentioned blocks each are described in detail. FGB expresses a fasting blood glucose level (FGB = BG (0)), and Ws expresses an assumed weight. DVg and DVi respectively express a distribution capacity volume against glucose and a distribution capacity volume against insulin.

### [Pancreas block of biological model]

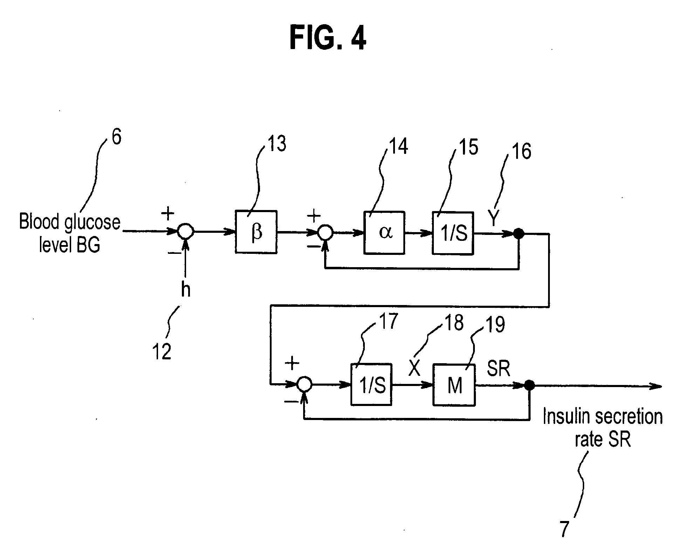

Relationship between input and output of the pancreas block 1 may be expressed using the following differential equation (1). Ablock diagram as in Fig. 4 equivalent to the differential equation (1) may be also used.
Differential equation (1): $\begin{matrix}dY / dt & = - α \left\{Y\left(t\right)-β⁢\left(BG\left(t\right)-h\right)\right\} \left(BG\left(t\right)>h\right) \\ & = - αY \left(t\right) ( BG \left(t\right) < = h )\end{matrix}$ $dX / dt = - M ⋅ X \left(t\right) + Y \left(t\right)$ $SR \left(t\right) = M ⋅ X \left(t\right)$
Variables:
BG(t): blood glucose level
X(t): total amount of insulin capable of secretion from pancreas
Y(t): supply rate of insulin newly supplied for glucose stimulation
SR(t): pancreas insulin secretion rate
Parameters:
h: threshold of glucose concentration capable of stimulating insulin supply
α: following performance to glucose stimulation
β: sensitivity to glucose stimulation
M: secretion rate per unit concentration
where a blood glucose level 6 which is input to the pancreas block in Fig. 2 corresponds to BG(t). The insulin secretion rate 7 which is output of the pancreas block in Fig. 2 corresponds to SR(t).

In a block diagram in Fig. 3, numeral 6 indicates a blood glucose level BG (t); 7, pancreas insulin secretion rate from pancreas SR (t) ; 12, glucose concentration threshold stimulating insulin supply h; 13, glucose stimulation sensitivity β; 14, glucose stimulation following capability α; 15, integral element; 16, supply rate of newly supplied insulin to glucose stimulation Y (t) ; 17, integral element; 18, total amount of insulin capable of secretion from pancreas X(t); 19, secretion rate per unit concentration M.

### [Hepatic block of biological model]

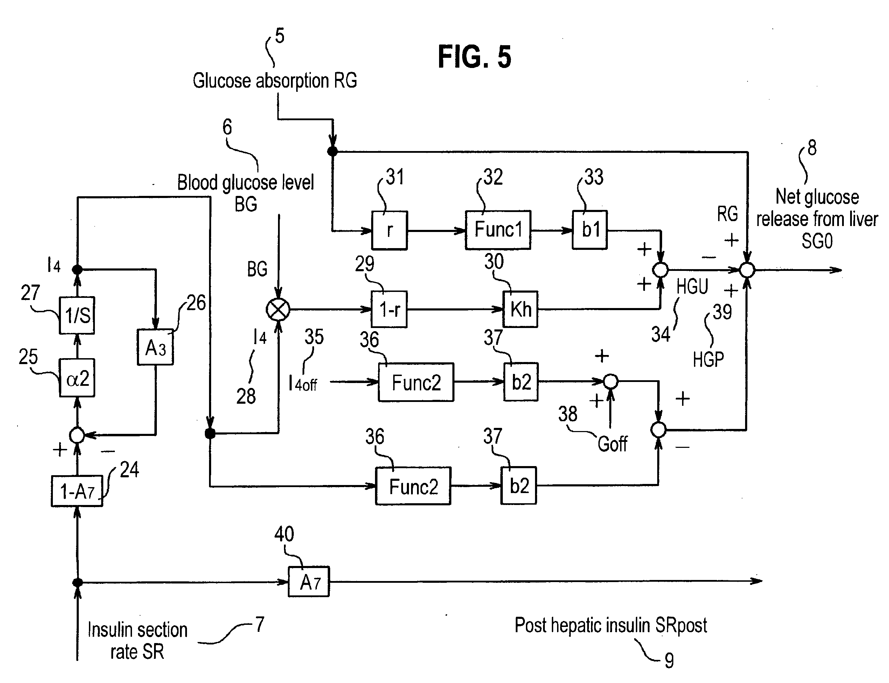

Relationship between input and output of the hepatic block 2 may be described using the following differential equation (2). Ablockdiagramas in Fig. 5 equivalent to the differential equation (2) may be also used.
Differential equation (2): $d ⁢ {I}_{4} \left(t\right) / dt = α ⁢ 2 \left\{-{A}_{3}⁢{I}_{4}\left(t\right)+\left(1-{A}_{7}\right)⋅SR\left(t\right)\right\}$ $\begin{matrix}Goff \left(FGB\right) & = \begin{matrix}f ⁢ 1 & \left(FGB<f⁢3\right)\end{matrix} \\ & = \begin{matrix}f ⁢ 1 + f ⁢ 2 ⋅ \left(FGB-f⁢3\right) & \left(FGB>=f⁢3\right)\end{matrix}\end{matrix}$ $Func ⁢ 1 ( FGB ) = f ⁢ 4 - f ⁢ 5 ⋅ \left(FGB-f⁢6\right)$ $Func ⁢ 2 ( FGB ) = f ⁢ 7 / FGB$ $b ⁢ 1 \left({I}_{4}\left(t\right)\right) = f ⁢ 8 \left\{1+f⁢9⋅I⁢4\left(t\right)\right\}$ $\begin{matrix}\begin{matrix}HGU \left(t\right) = r ⋅ Func ⁢ 1 \left(FBG\right) ⋅ b ⁢ 1 \left({I}_{4}\left(T\right)\right) ⋅ RG \left(t\right) +\end{matrix} \left(1-r\right) ⋅ Kh ⋅ BG \left(t\right) ⋅ I ⁢ 4 \left(t\right) & ( HGU \left(t\right) > = 0\end{matrix}$ $\begin{matrix}\begin{matrix}HGP \left(t\right) = {I}_{4 ⁢ off} ⋅ Func ⁢ 2 \left(FBG\right) ⋅ b ⁢ 2 + {G}_{off} \left(FBG\right)\end{matrix} - {I}_{4} \left(t\right) ⋅ Func ⁢ 2 \left(FBG\right) ⋅ b ⁢ 2 & \left(HGP\left(t\right)>=0\right)\end{matrix}$ $SGO \left(t\right) = RG \left(t\right) + HGP \left(t\right) - HGU \left(t\right)$ $SRpost \left(t\right) = {A}_{7} ⁢ SR \left(t\right)$
Variables:
BG(t): blood glucose level
SR(t): pancreas insulin secretion rate
SRpost(t): post hepatic insulin
RG(t): glucose absorption from digestive tract
HGP(t): hapatic glucose release
HGU (t): hepatic glucose uptake
SGO (t): net glucose from liver
I₄(t): hepatic insulin concentration
Parameter:
Kh: hepatic glucose uptake rate per unit insulin and unit glucose
A₇: insulin uptake rate in liver
Goff: glucose release rate to basal metabolism
b2: adjustment term for hepatic glucose release suppression rate
r: insulin-dependent hepatic glucose uptake distribution rate
α2: transmission efficiency to insulin stimulation
I_{4off}: insulin concentration threshold of hepatic glucose release suppression
Function:
Goff (FBG): glucose release rate to basal metabolism
Funcl(FBG): hepatic glucose uptake rate to stimulation of glucose from digestive tract
Func2 (FBG): hepatic glucose release-suppression rate to insulin stimulation
f1 to f9: constants used to express the above-mentioned three elements
b1 (I₄(t)) : adjustment item for hepatic glucose incorporation rate
where the glucose absorption 5 fromdigestive tract which is input to the hepatic block in Fig. 3 corresponds to RG(t), the blood glucose level 6 to BG (t) and the insulin secretion rate 7 to SR(t). The net glucose release 8 which is output corresponds to SGO(t) and the post liver insulin 9 to SRpost(t).

In a block diagram in Fig. 5, numeral 5 expresses glucose absorption from digestive tract RG(t); 6, blood glucose level BG (t) ; 7, pancreas insulin secretion rate SR(t); 8, net glucose from liver SGO(t);9, post liver insulin SRpost(t); 24, liver insulin passage rate (1 - A7); 25, followability to insulin stimulation α2; 26, post liver insulin distribution rate A3; 27, integral element; 28, hepatic insulin concentration I₄(t); 9, insulin-dependant hepatic glucose incorporation distribution rate (1-r); 30, liver insulin-dependent glucose incorporation rate per unit insulin and unit glucose Kh; 31, insulin-independent hepatic glucose incorporation rate r; 32, hepatic glucose incorporation rate to glucose stimulation from digestive tract Funcl(FGB); 33, adjustment item for hepatic incorporation rate b1 (I₄(t)); 34, hepatic glucose incorporation HGU (t) ; 35, insulin concentration threshold of hepatic glucose release inhibition I_{4off}; 36, hepatic release-inhibition rate to insulin stimulation Func2 (FGB); 37, adjustment items hepatic glucose release-inhibition rate b2; 38, glucose release rate to basal metabolism; 39, hepatic glucose release HGP(t); 40, insulin incorporation rate in liver A₇.

### [Insulin kinetics block of biological model]

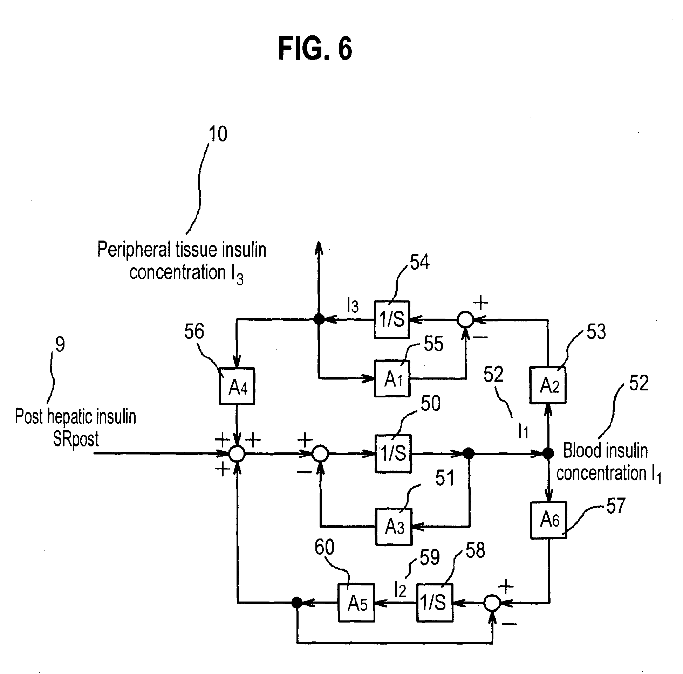

Relationship between input and output of the insulin kinetics secretion may be described using the following differential equation (3). A block diagram as in Fig. 6 equivalent to the differential equation (3) may be also used.
Differential equation (3): $d ⁢ {I}_{1} \left(t\right) / dt = - {A}_{3} ⁢ {I}_{1} \left(t\right) + {A}_{5} ⁢ {I}_{2} \left(t\right) + {A}_{4} ⁢ {I}_{3} \left(t\right) + SRpost \left(t\right)$ $d ⁢ {I}_{2} \left(t\right) / dt = {A}_{6} ⁢ {I}_{1} \left(t\right) - {A}_{5} ⁢ {I}_{2} \left(t\right)$ $d ⁢ {I}_{3} \left(t\right) / dt = {A}_{2} ⁢ {I}_{1} \left(t\right) - {A}_{1} ⁢ {I}_{3} \left(t\right)$
Variables:
SRpost(t): post hepatic insulin
I₁(t): blood insulin concentration
I₂(t): insulin concentration in insulin-independent tissues
I₃(t): insulin concentration in peripheral tissues
Parameters:
A₁: insulin disappearance rate in peripheral tissues
A₂: insulin distribution rate to peripheral tissues
A₃: post hepatic insulin distribution rate
A₄: post peripheral tissue insulin flow out rate
A₅: insulin disappearance rate in insulin-independent tissues
A₆: insulin distribution rate to insulin-independent tissues
where the post liver insulin 9 which is input to the insulin kinetics block in Fig. 3 corresponds to SRpost (t) . The peripheral tissue insulin concentration 10 which is output corresponds to I₃(t).

In a block diagram in Fig. 6, numeral 9 expresses post liver insulin SRpost (t); 10, insulin concentration in peripheral tissue I₃(t); 50, integral element; 51, post liver insulin distribution rate A₃; 52, blood insulin concentration I₁(t); 53, insulin distribution rate to peripheral tissues A₂; 54, integral element; 55, insulin disappearance rate in peripheral tissue A1; 56, post peripheral tissue insulin discharge rate A₄; 57, insulin distribution rate to insulin-independent tissue A6; 58, integral element; 59, insulin concentration in insulin-independent tissue I₂(t) ; 60, insulin disappearance rate in insulin-independent tissue A₅.

### [Peripheral tissue block of biological model]

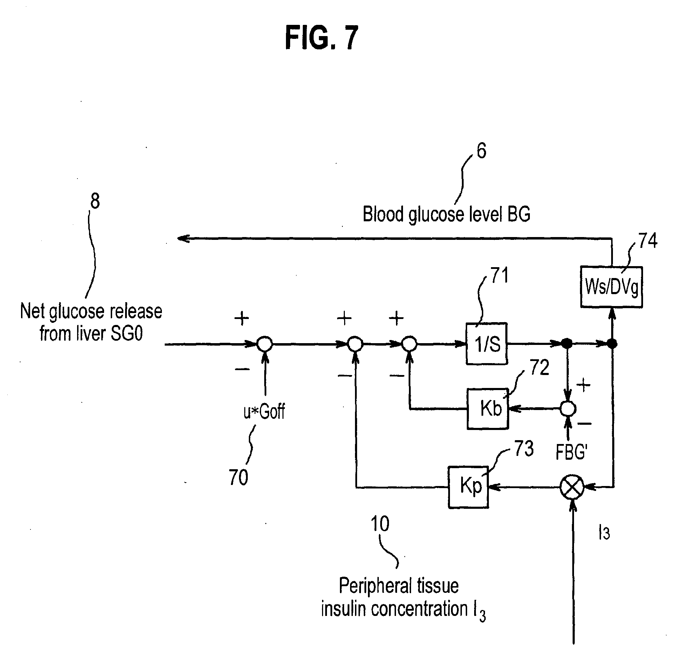

Relationship between input and output of the peripheral tissue block 4 may be described using the following differential equation (4). A block diagram as in Fig. 7 equivalent to the differential equation (4) may be also used.
Differential equation (4): $dBGʹ / dt = SGO \left(t\right) - u * Goff \left(FGB\right) - Kb ⁢ \left(BGʹ\left(t\right)-FBGʹ\right) - Kp ⋅ {I}_{3} \left(t\right) ⋅ BGʹ \left(t\right)$
Variables:
BG'(t): blood glucose level (BG[mg/d1], BG'[mg/kg])
SGO(t): net glucose from liver
I3(t): insulin concentration in peripheral tissues
FBG': fasting blood glucose (provided that FBG'=BG(0))
Parameters:
Kb: insulin-independent glucose consumption rate in peripheral tissues
Kp: insulin-dependent glucose consumption rate in peripheral tissues per unit insulin and per unit glucose
u: ratio of insulin-independent glucose consumption to basal metabolism in glucose release rate to basal metabolism
Functions:
Goff(FGB): glucose release rate to basal metabolism
f1 to f3: constant used to express Goff
where the peripheral tissue insulin concentration 10 which is input to the peripheral tissue block in Fig. 3 corresponds to I₃(t), the net glucose 8 from liver corresponds to SGO(t). The blood glucose level 6 which is output corresponds to BG(t).

In a block diagram in Fig. 7, numeral 6 expresses blood glucose level BG(t); 8, net glucose from liver SGO(t); 10, insulin concentration in peripheral tissues I₃(t); 70, insulin-independent glucose consumption rate to basal metabolism u*Goff(FGB); 71, integral element; 72, insulin-independent glucose consumption rate in peripheral tissues Kb; 73, insulin-dependent glucose consumption rate in peripheral tissues per unit insulin and per unit glucose Kp; 74, unit conversion constant Ws/DVg.

As shown in Fig. 3, since inputs and outputs are mutually connected between the blocks constituting the present system, by giving glucose absorption 5 fromdigestive tract, it is possible to calculate and simulate time courses of blood glucose level and insulin concentration based on the mathematical formula.

With regard to calculation of the differential equations of the present system, e.g. E-Cell (software disclosed by Keio University) and MatLab (manufactured by The MathWorks, Inc.) may be employed. Or other calculation system may be employed.

### [Biological model generating section]

To simulate individual patient biological organs using the above-mentioned biological models as shown in Figs. 3 to 7, it is required to generate a biological model having characteristics suited for individual patients. To be more specific, it is required to determine parameters and initial values of variables of biological model according to the individual patient, and apply the determined parameters and initial values to the biological model, thereby generating a biological model suited for the individual patient. (Unless otherwise specified, an initial value of variable is also included in parameters to be generated.)

In order to realize the function of the biological model generating section, the server 2 of the system SS also has a function of determining an internal parameter set which is a set of internal parameters of biological model (hereinafter, also simply referred to as "parameter set"), and generating a biological model to which the determined parameter set is applied. This function is realized by the pathogenic condition simulator program S3.

By giving the parameter set generated by the biological model generating section to the biological model, the biological model calculating section is enabled to conduct simulation of a function of biological organ and output a simulated response simulating the actual biological response (test result).

### [Parameter set generating section]

In the following, description will be made for a parameter set generating section for forming a biological model that simulates a biological organ of a patient based on an actual test result (biological response) of the patient (biological body).

### [OGTT time-series data input: Step S1-1]

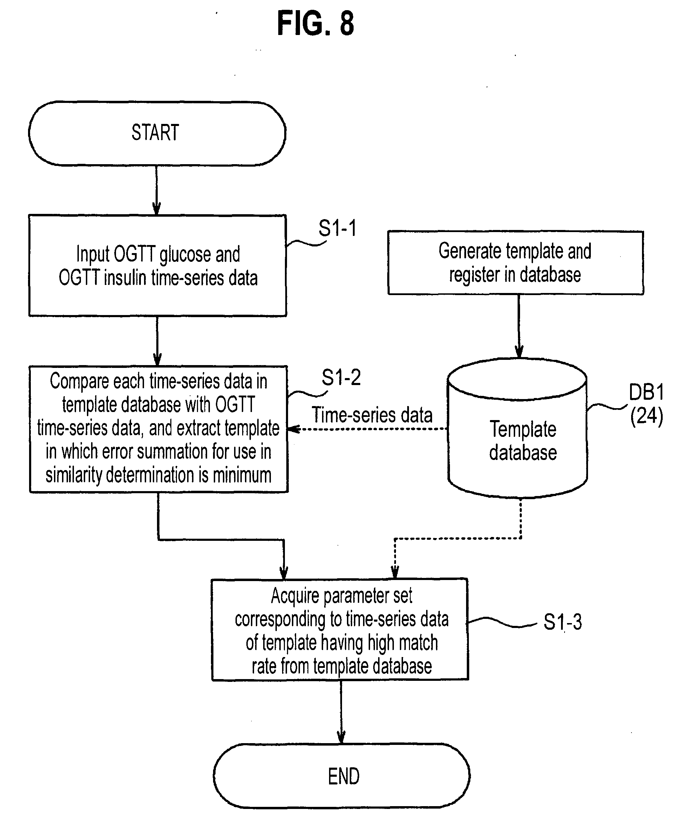

Fig. 8 is a flowchart showing procedures in which the parameter set generating section of system SS obtains a parameter set of the biological model. In order to obtain parameters, first, an inputting step of OGTT (oral glucose tolerance test) time-series data which is an actual test result (biological response) is executed as shown in the flowchart (Step S1-1).

OGTT time-series data are a result of OGTT (given amount of glucose solution is orally loaded to measure the time-series of blood glucose level and blood insulin concentration) from the actual examination of patients simulated by a biological model. The present system receives input as an actual biological response (actual examination values) from the client terminal 3. Here, two data of and OGTT glucose data (blood glucose change data) and OGTT insulin (blood insulin concentration change data) are input as OGTT time-series data.

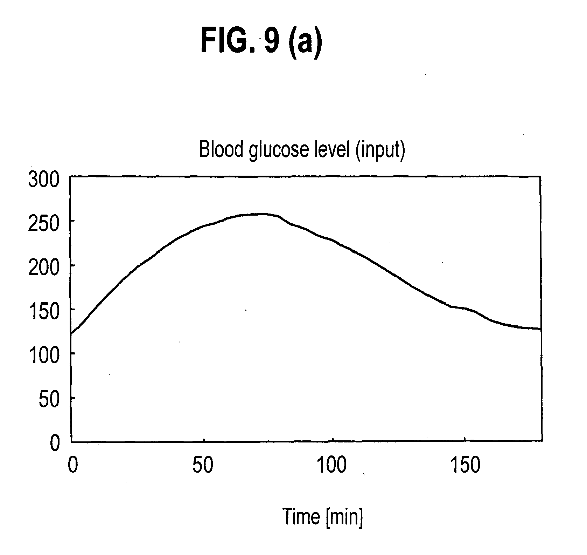

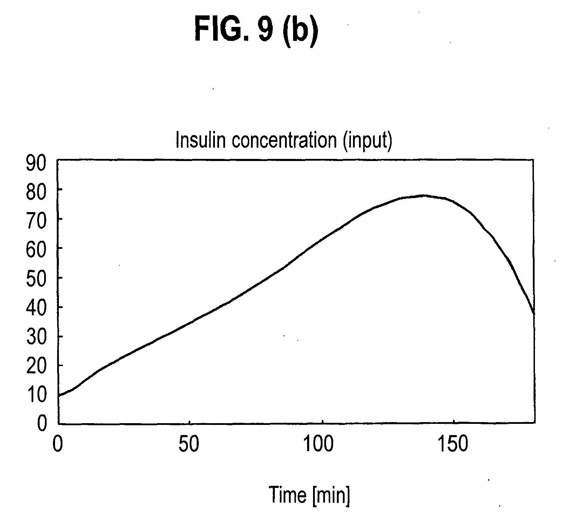

Fig. 9(a) shows an example of the blood glucose level change data and Fig. 9(b) shows an example of the blood insulin concentration change data as OGTT time-series data to be input.

In Fig. 9(a), the blood glucose level change data is measured data corresponding to time course of blood glucose level BG(t), one of output items in the biological model shown in Figs. 3 to 7.

In Fig. 9(b), the blood insulin concentration change data is measured data corresponding to time course of blood insulin concentration I₁(t), one of output items in the biological model shown in Figs. 3 to 7.

### [Template matching: Step S1-2]

Next, the present system SS matches the input OGTT time-series data to the template of template database DB1. The template database DB1 is one of database included in the database 24 of the server S.

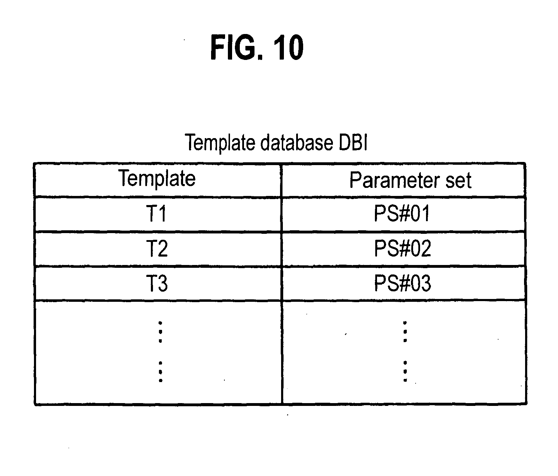

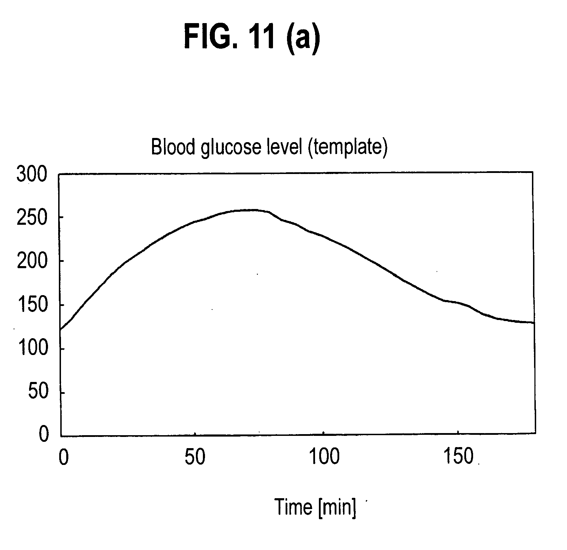

As shown in Fig. 10, the template database DB1 is preliminarily stored with a plurality sets of data, which are biological model reference output values T1, T2, ... as a template and parameter set PS#01, PS#02 ... correspondent to the reference output value to generate the reference output value. To make up a pair of reference output value and parameter set, a random reference output value is assigned by an appropriate parameter set, or on the contrary, a biological model output at the time when a random parameter set is selected is obtained by the biological simulation.

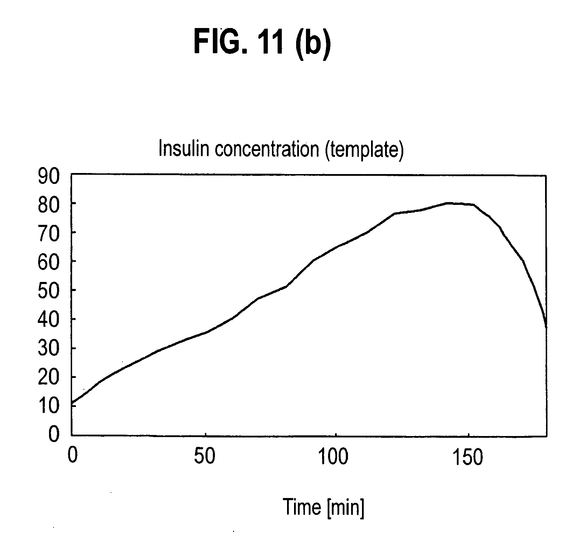

Fig. 11(a) and Fig. 11(b) shows examples of the template (reference output value) T1. Fig. 11(a) is a blood glucose change data as a template, which is reference time-series data corresponding to time course of the blood glucose level BG(t), one of output items in the biological model shown in Figs. 3 to 7. Fig. 11(b) is blood insulin concentration change data as a template, which is reference time-series data corresponding to time course of blood insulin concentration I₁(t), one of output items in the biological model shown in Figs. 3 to 7.

The system SS computes similarity between each reference time-series datum of the above-mentioned template database DB1 and OGTT time-series data. The similarity is obtained by obtaining error summation. The error summation is obtained by the following formula. $Error summation = αΣ ⁢ ¦BG \left(0\right) - BGt \left(0\right) ⁢ ¦ + βΣ ⁢ ¦PI \left(0\right) - PIt \left(0\right) ⁢ ¦$ $+ αΣ ⁢ ¦BG \left(1\right) - BGt \left(1\right) ⁢ ¦ + βΣ ⁢ ¦PI \left(1\right) - PIt \left(1\right) ⁢ ¦$ $+ αΣ ⁢ ¦BG \left(2\right) - BGt \left(2\right) ⁢ ¦ + βΣ ⁢ ¦PI \left(2\right) - PIt \left(2\right) ⁢ ¦ + ...$ $= α \left\{Σ⁢¦BG\left(t\right)-BGt\left(t\right)⁢¦\right\} + β \left\{Σ⁢¦PI\left(t\right)-PIt\left(t\right)⁢¦\right\}$
where
BG: input data blood glucose level [mg/dl]
PI: input data blood insulin concentration [µU/ml]
BGt: template blood glucose level[mg/dl]
PIt: template blood insulin concentration [µU/ml]
t: time[minute]

Here, α and β are coefficient used for normalization $α = 1 / Average \left\{ΣBG\left(t\right)\right\}$ $β = 1 / Average \left\{ΣPI\left(t\right)\right\}$

The average of the formula shows average level to all templates stored in the template database DB1.

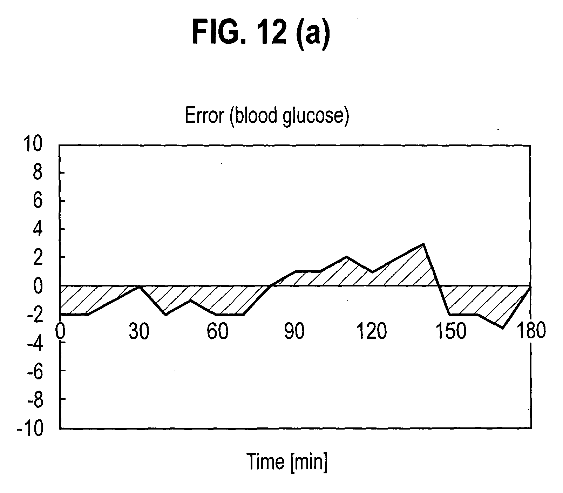

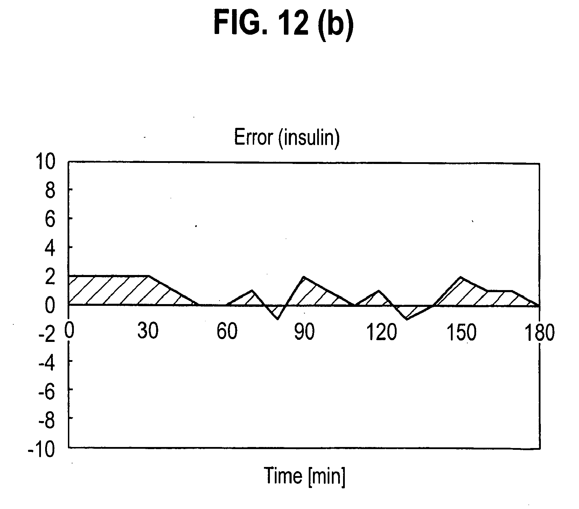

Fig. 12(a) and Fig. 12(b) show the OGTT time-series error summation(no normalization) to the template T1. More specifically, Fig. 12(a) shows an error between the blood glucose level of Fig. 9(a) and the blood glucose level of Fig. 11(a). Fig. 12(b) shows an error between the insulin of Fig. 9(b) and the insulin of Fig. 11(b).

Based on Fig. 9(a) and Fig. 9(b) input data (date in the range of 0 to 180 minutes every 10 minutes) and Fig. 11(a) and Fig.11 (b) template T1, $Σ ⁢ ¦BG \left(t\right) - BGt \left(t\right) ⁢ ¦ = 29$ $Σ ⁢ ¦PI \left(t\right) - PIt \left(t\right) ⁢ ¦ = 20$
where, provided $α = 0.00035 , β = 0.00105$ $\begin{matrix}Error summation & = \left(0.0035\times 29\right) + \left(0.00105\times 20\right) \\ & = 0.03115\end{matrix}$

Thus, CPU 100a obtains an error summation to each template in the template database DB1, and determines the template having the minimum error summation (similarity). Thus, CPU 100a determines the template which is the most approximate to OGTT time-series data (Step S1-2).

### [Acquisition of parameter set: Step 1-3]

Further, in a step S1-3, the system SS obtains from template database DB1 a parameter set corresponding to the template which has been determined in the step S1-2 and has been judged to be similar in the step S1-3. That means, a parameter set PS#01 corresponding to the template T1 is obtained (Refer to Fig. 10).

The table below exemplifies the specific numeral values of the parameter values included in the parameter set PS#01 obtained by the above-mentioned way.

Parameter set PS#01 corresponding to template T1

| | Parameter | Value | Unit |
|---|---|---|---|
| Pancreas | h | 92.43 | [mg/dl] |
| | α | 0.228 | [1/min] |
| | β | 0.357 | [(µU/ml) · (dl/mg) · (1/min)] |
| | M | 1 | [1/min] |
| | X(0) | 336.4 | [µU/ml] |
| | Y(0) | 4.4 | [(µU/ml) · (1/min)] |
| Insulin kinetics | A1 | 0.025 | [1/min] |
| | A₂ | 0.042 | [1/min] |
| | A₃ | 0. 435 | [1/min] |
| | A₄ | 0.02 | [1/min] |
| | A₅ | 0.394 | [1/min] |
| | A₆ | 0.142 | [1/min] |
| Peripheral tissues | Kb | 0. 009 | [1/min] |
| | Kp | 5. 28E-05 | [(ml/µU) · (1/min)] |
| | u | 0. 6 | |
| Liver | A₇ | 0.47 | |
| | Kh | 0.0000462 | [(ml/µU) · (1/min) · (dl/kg)] |
| | b2 | 1.1 | |
| | r | 0.98 | |
| | α2 | 0.228 | |
| | \|4off | 5 | [µU/ml] |

### [Simulated response acquiring section (biological model calculating section)]

When the above-mentioned parameter set PS#01 is given to the biological model, the system SS makes calculation based on the biological model, and outputs simulated response information which simulates the input OGTT time-series data (time courses in blood glucose level and insulin concentration) (functions as a simulated response acquiring section of the system SS (biological model calculating section)).

That is, the system SS is capable of simulating a biological organ of a patient based on the generated biological model. This function is realized by a pathogenic condition simulator program S3.

The generated parameter set is also used for acquiring pathologic condition characteristics information, and this point will be described later.

### [User interface (input/output part)]

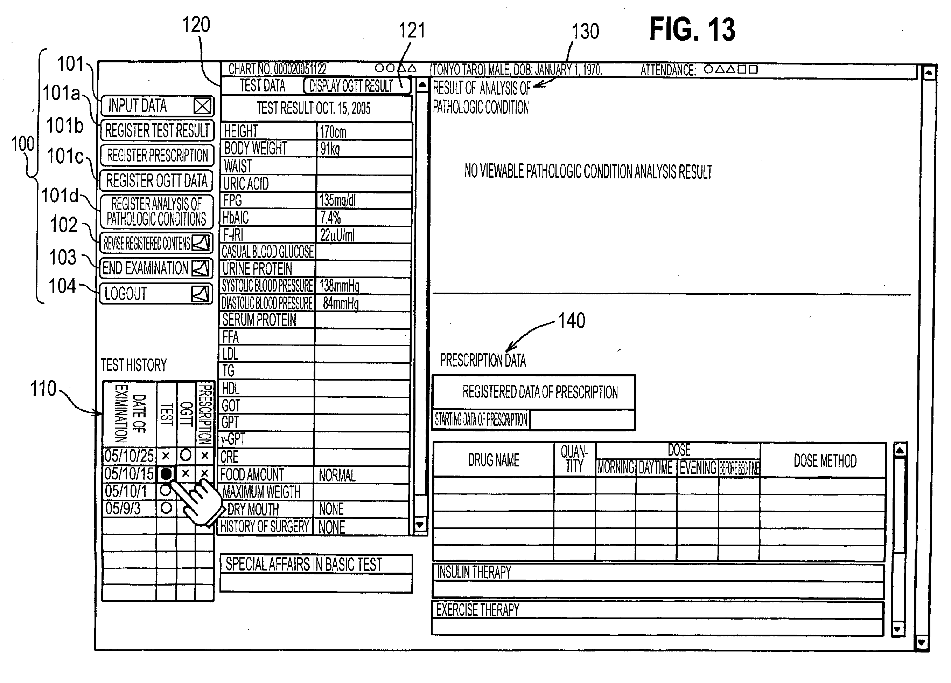

Fig. 13 shows a system operating screen generated by an user interface program S2 in the server S. This screen is transmitted to the client C from the server S2 and displayed on the Web browser C1 of the client C. A user such as a physician is allowed to input information or view information on this screen.

The screen in Fig. 13 principally has an operating part 100, a test history display part 110, a test data display part 120, a pathologic condition analysis result display part 130, and a prescription data display part 140.

The operating section 100 has a data input part 101 for input and registration of various data, a registered content revising part 102 for revise of registered data, an examination ending part 103 at which examination ending operation is made, and a logout part 104 at which logging out is made.

### [Data input part 101]

The data input part 101 has a "Register test result" button 101a for registration of results of basic tests (test results of test items shown in the test data display part 120 in Fig. 13), a "Register prescription" button 101b for registration of prescription made for a patient, a "Register OGTT data" button 101c for registration of OGTT test result (biological response), and a "Register analysis of pathologic condition" button 101d for conducting analysis of pathologic condition and registering the result.

### [Basic test result input 101a]

When the "Register test result" button 101a is clicked, an input screen of test result (not shown) is displayed, and a test result can be inputted for each basic test item displayed in the test data displaypart 120 of Fig. 13. Upon input and registration of the test result in the database S4, the fact that a test result is registered is indicated by the mark "?" together with the registered date (examination date) in the test history display part 110.

### [Prescription input 101b]

When the "Register prescription" button 101b is clicked, an input screen for prescription for the patient is displayed in the input screen, and is ready for registration of input prescription in the database S4. Upon input and registration of prescription, the fact that prescription is registered is indicated by the mark "?" together with the registered date (examination date) in the test history display part 110.

The input screen for prescription will be described later.

### [OGTT input (biological response input part) 101c]

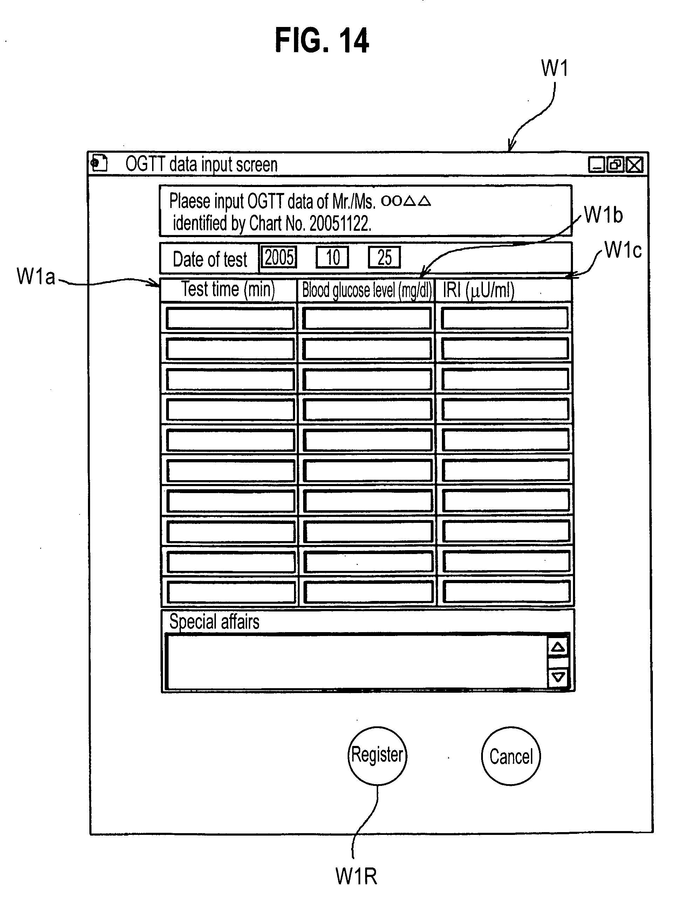

When the "Register OGTT data" button 101c is clicked, OGTT data input screen (window) W1 is open and displayed as shown in Fig. 14.

The screen W1 includes an input box column W1a for test time, an input box column W1b for blood glucose level, and an input box column W1c for insulin concentration (IRI), and as OGTT data which is an actual test result, time courses of blood glucose level and insulin concentration may be inputted.

When the register button WlR on the screen W1 is clicked after inputting values of blood glucose level and insulin concentration, the contents thereof are registered in the database S4.

Upon registration of the OGTT data, the fact that OGTT data is registered is indicated by the mark "?" together with the registered date (examination date) in the test history display part 110.

Here, the data inputted in the screen W1 functions as original data in drawing the graph showing time courses in blood glucose level and insulin concentration shown in Fig. 9(a), 9(b) and in the pathologic condition analysis result display part 130.

### [Analysis of pathologic condition 101d]

When the "Register analysis of pathologic condition" button 101d is clicked, the pathogenic condition simulator program S3 makes simulation using OGTT data, executes analysis of pathologic condition, and acquires the pathologic condition characteristics information indicating characteristics of pathogenic condition. The acquired pathologic condition characteristics information is registered in the database S4 in relation with the OGTT data. The details of the analysis of pathologic condition will be described later.

### [Test history display part 110]

The test history display part 110 displays presence/absence of registrations of (general) test, OGTT, prescription for each examination date. The absence of registration is indicated by the mark "x".

The test history display part 110 also functions as a display changeover operation part for switching display in the test data display part 120 and the prescription data display part 140, and display contents in the screen of Fig. 13 can be switched to a display corresponding to date or the mark "?" by clicking the date portion in the examination date or clicking the mark "?".

### [Test data display part 120]

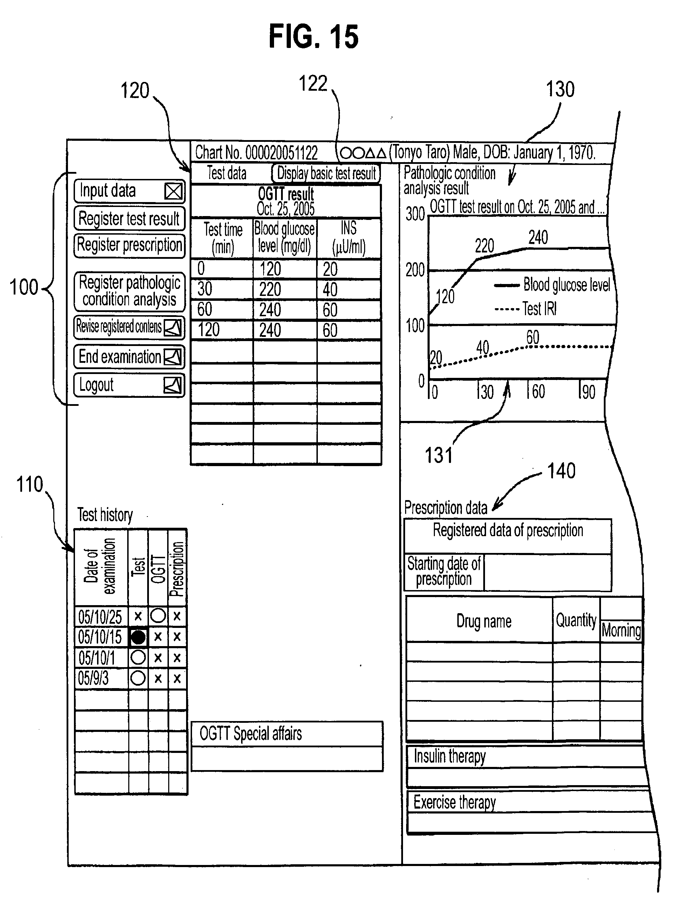

The test data display part 120 is provided for display of a basic test result or OGTT result of a patient. Fig. 13 shows the state in which a basic test result is displayed in the test data display part 120, and Fig. 15 shows the state in which an OGTT result is displayed in the test data display part 120.

When a basic test result is displayed in the test data display part 120, "Display OGTT result" button 121 is displayed (see Fig. 13), and when an OGTT result is displayed, "Display basic test result" button 122 is displayed (see Fig. 15). Clicking of these buttons 121, 122 enables changeover of display between these results.

### [Pathologic condition analysis result display part (of outputting section of biological response information and pathologic condition characteristics information) 130]

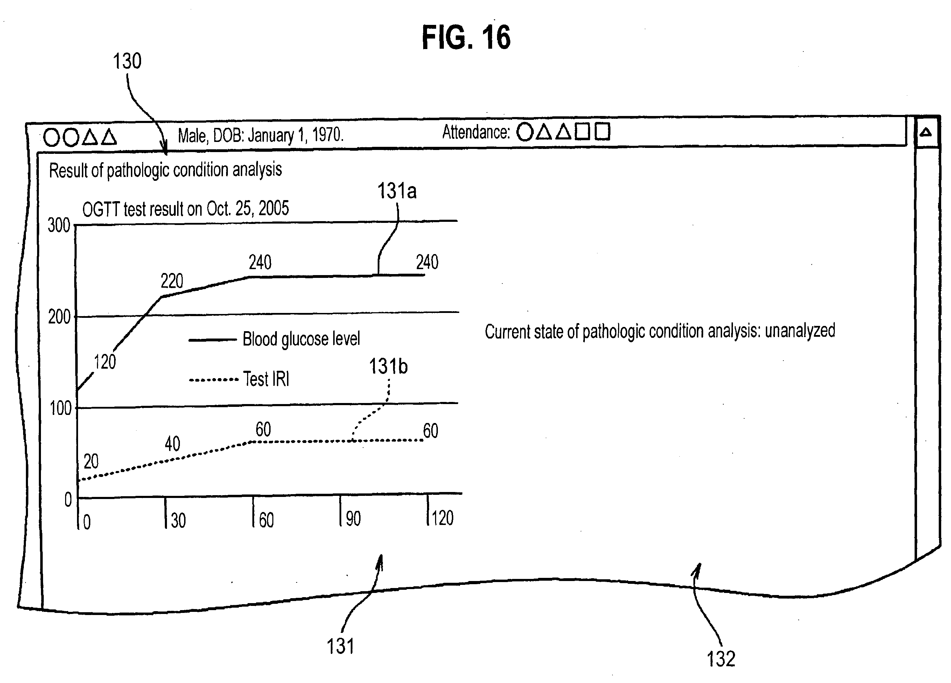

As shown in Fig. 15 and Fig. 16, when an OGTT test result is displayed in the test data display part 120, the pathologic condition analysis result display part 130 makes a graph display 131 corresponding to the OGTT test result (biological response) and a radar chart display 132 of pathologic condition characteristics information analyzed based on the OGTT test result. Further, the pathologic condition analysis result display part 130 is also provided with a pathogenic condition description part 133 for displaying pathogenic condition describing text.

In a graph 131, time course of blood glucose level 131a in the actual OGTT test result, as well as time course 131b of insulin concentration in the actual OGTT test result are displayed.

Fig. 15 shows the state in which the OGTT test result is inputted, but analysis of the pathologic condition has not been conducted. Therefore, the graph 131 for the OGTT result is displayed, while the radar chart for the pathologic condition characteristics information is not displayed.

### [Pathologic condition simulation analysis (acquiring of pathologic condition characteristics and acquiring of simulated response)]

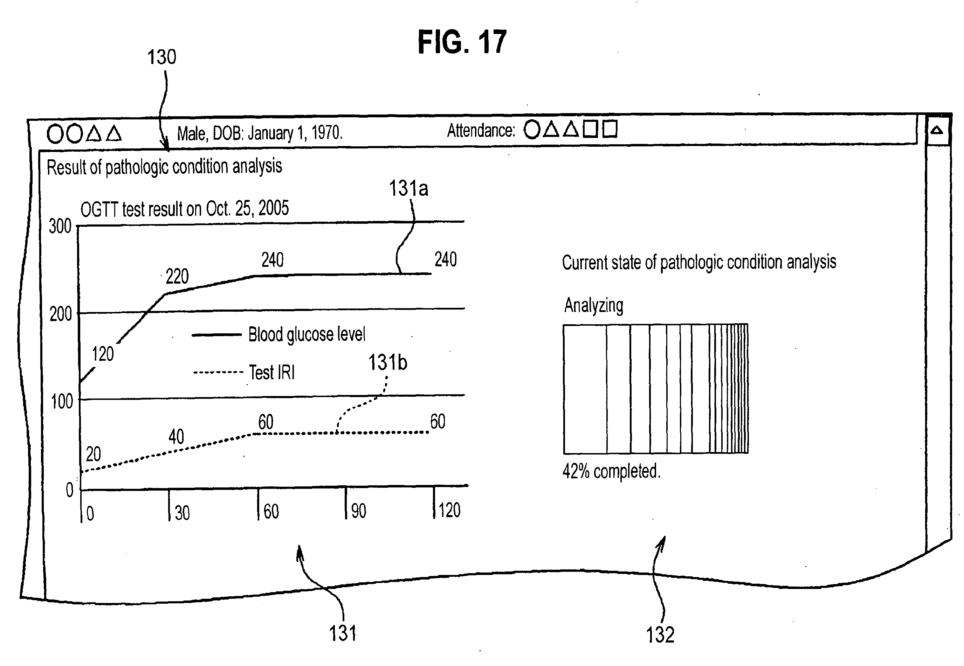

As shown in Fig. 15 and Fig. 16, when the "Register analysis of pathologic condition" button 101d is clicked in the condition that the OGTT test result is displayed on the screen, simulation is executed, and analysis of pathologic condition (acquiring of pathologic condition characteristics information) and, acquiring of reproduced value of OGTT test result (simulated response) are conducted. Fig. 17 shows a screen display during analysis.

In simulation, a parameter set constituting a biological model capable of outputting a reproduced value (simulated response information) simulating an actual OGTT test result (biological response information) is determined by calculation. Then the system SS determines a reproduced value of OGTT test result (simulated response information) as an output value of biological model to which the parameter set is applied (simulated response acquiring function of system SS).

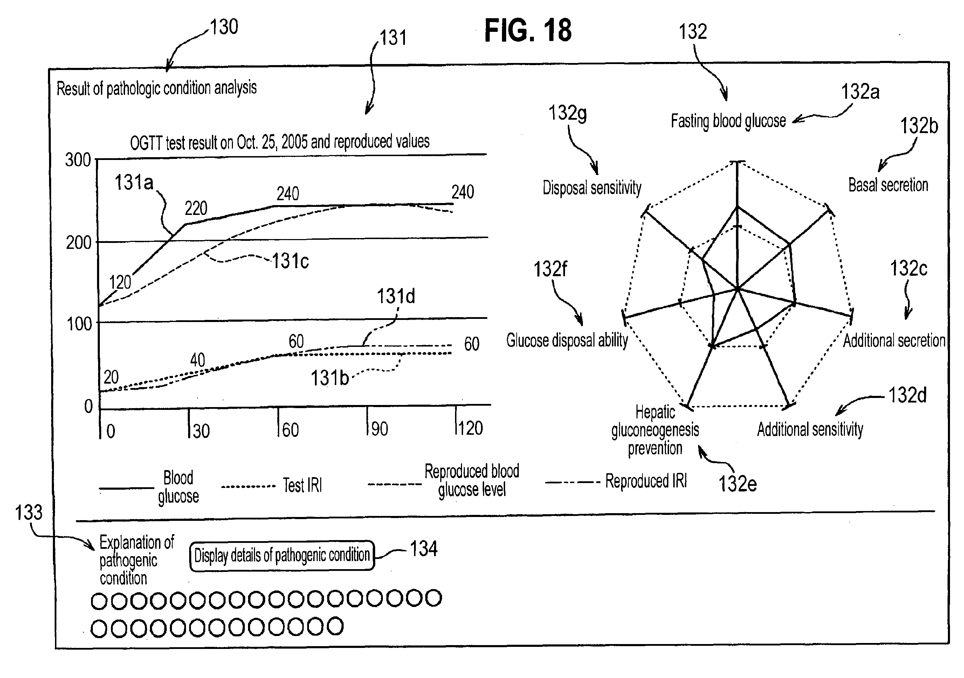

As shown in Fig. 18, the reproduced value of OGTT (blood glucose reproduced value 131c and reproduced IRI 131d) is displayed in the graph display 131 of the pathologic condition analysis result display part 130 together with an actual OGTT test result (test blood glucose level 131a and test IRI 131b).

A user such as a physician compares the actual test result (biological response information) and the reproduced value (simulated response information) produced by simulator in the graph display 131 to check whether the both values are close and the biological model by the simulator properly simulates an actual biological organ of a patient. According to the graph display 131 in Fig. 18, the actual test result and the reproduced value well resemble with each other, revealing that the biological model generated through simulation is appropriate.

### [Pathologic condition characteristics acquiring section]

The system SS determines pathologic condition characteristics information indicating characteristics of pathogenic condition of a patient based on (parameter set of) the generated biological model (pathologic condition characteristics information acquiring function of system SS).

As shown in Fig. 18, in the present embodiment, as indexes ofcharacteristicsofpathogenic condition,fasting blood glucose 132a, basic secretion 132b, additional secretion 132c, secretion sensitivity 132d, hepatic gluconeogenesis prevention 132e, glucose processing ability 132f, and processing sensitivity 132g are employed.

As such indexes those clearly indicating characteristics of pathologic condition are employed, and in particular, biological functions that can be improved by some therapy are employed.

Here, the fasting blood glucose 132a is calculated from blood glucose level BG (t=0) which is a variable of biological model. The basic secretion 132b is calculated from fasting insulin I₁(t=0) which is a variable of biological model. The additional secretion is calculated from an integration value of I₁(t=). The secretion sensitivity 132d is calculated from sensitivity β against glucose stimulation which is a parameter of biological model. The hepatic gluconeogenesis prevention 132e is calculated from hepatic glucose release HGTP (t) which is a variable of biological model. The glucose processing ability 132f is calculated from net glucose from liver SGO (t) and blood glucose level BG (t) which are variables of biological model. The processing sensitivity 132g is calculated from insulin-dependent glucose consumption rate Kp in peripheral tissues per unit insulin and unit glucose that are parameters of biological model.

As described above, since the biological model is made up of a mathematical model having parameters (including variables) indicating characteristics of biological organs, parameter values of the biological model show values related with pathologic condition. Therefore, pathologic condition characteristics information indicating characteristics of pathologic condition can be calculated based on these parameters can be compared.

Here, in the radar chart 132 of Fig. 18, values for each index of pathologic condition characteristics information are scored and displayed, so that goodness of values of respective indexes of different units and value widths.

In the radar chart 132 of Fig. 18, it can be seen that glucose processing ability 132f and processing sensitivity 132g related to the peripheral processing ability are relatively low. Therefore, the physician viewing the radar chart (output of pathologic condition characteristics information) can readily determine that the therapeutic strategy for improvement of glucose processing ability in peripherals is effective.

In addition, since the actual OGTT test result 131a, 131b and the pathologic condition characteristics information 132 are displayed in the same screen, the physician can compare these and study the relationship between the graph shape of the OGTT test result and the pathologic condition. Therefore, an effective study for grasping the pathogenic condition from the OGTT test result is expected by gaining practical experience using this system SS.

Further, any desired value rather than actual test result (biological response information) may be inputted to the input screen of OGTT test result (biological response). And outputs of test result reproduced value (simulated response information) and pathologic condition characteristics information can be obtained for the any desired value. Therefore, the physician inputs any desired test result value (biological response information) and know the pathologic condition that will be expected in that case. Therefore, even when there is no data of actual patient, one can use the present system for training purpose by inputting a certain appropriate test result.

In other words, the system SS may be used for training physicians of other specialty and inexperienced physicians.

Since there is provided a pathologic condition analysis result display part 130 in Fig. 18, a user such as a physician can readily grasp the pathologic condition of a patient, and obtain study effect about relation between test result and pathologic condition. In addition, since both the result of actual test and the reproduced value are displayed, accuracy of the displayed pathologic condition characteristics information can be checked and erroneous study is prevented.

Further, in the pathologic condition analysis result display part 130, after completion of the pathologic condition analyzing process, pathologic condition describing text is displayed in the pathologic condition description display part 133. The pathologic condition describing text is registered in advance in the database S4, and pathologic condition describing text corresponding to (parameter of) the generated biological model is selected by the system, and the selected text is displayed in the pathologic condition description display part 133. When the "Display details of pathologic condition" button 134 is clicked, more detailed describing text will be displayed in another window.

By displaying the pathologic condition describing text in the manner as described above, the pathologic condition characteristics information displayed in the radar chart 132 can be readily understood, and a physician can grasp the pathologic condition more properly.

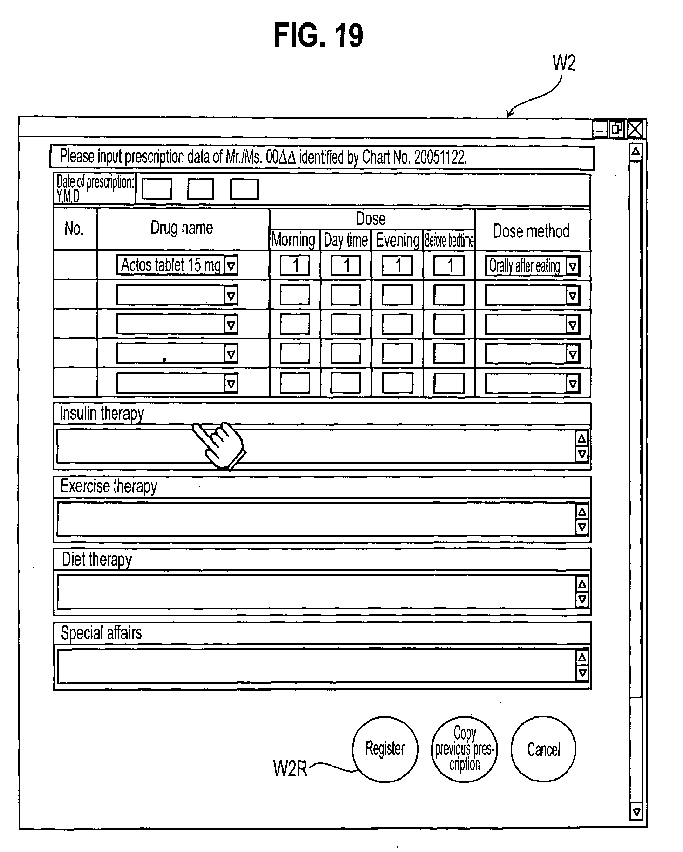

When the physician grasps the pathologic condition in the manner as described above, and determines therapeutic strategy and prescription, the prescriptionmaybe registered in the system SS. To be more specific, when the "Register prescription" button 101b is clicked, the "prescription register screen" W2 shown in Fig. 19 is displayed. The physician is allowed to input a drug name, etc. on the screen W2. When clicking the register button W2R in the screen W2 after inputting prescription, the prescription is registered in the database S4.

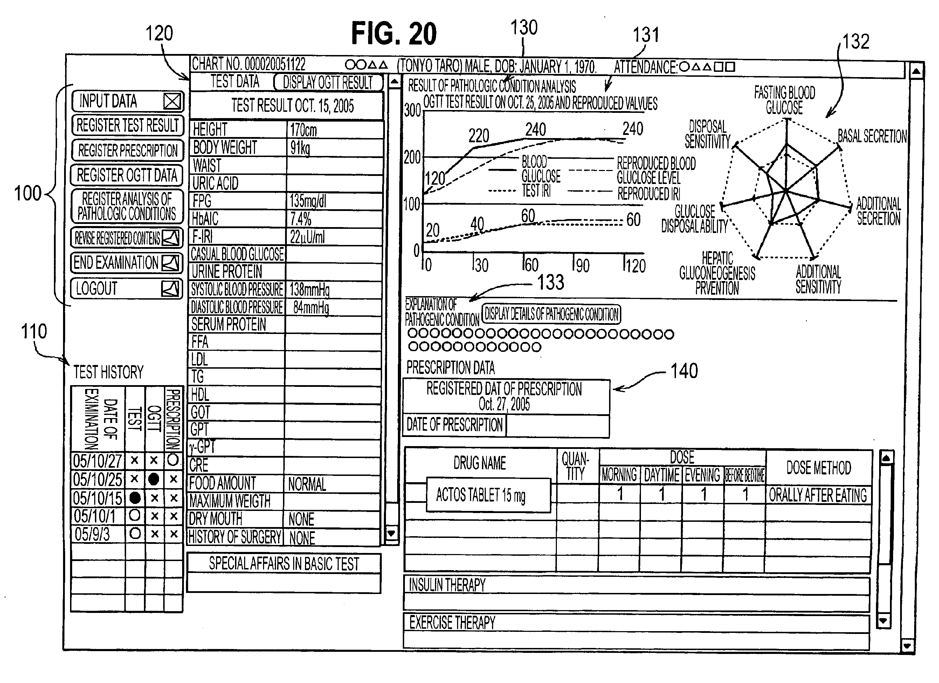

Fig. 20 shows the screen of Web browser C1 after completion of analysis of pathologic condition and registration of prescription.

### [Pathologic condition characteristics inputting section and simulated response acquiring section]

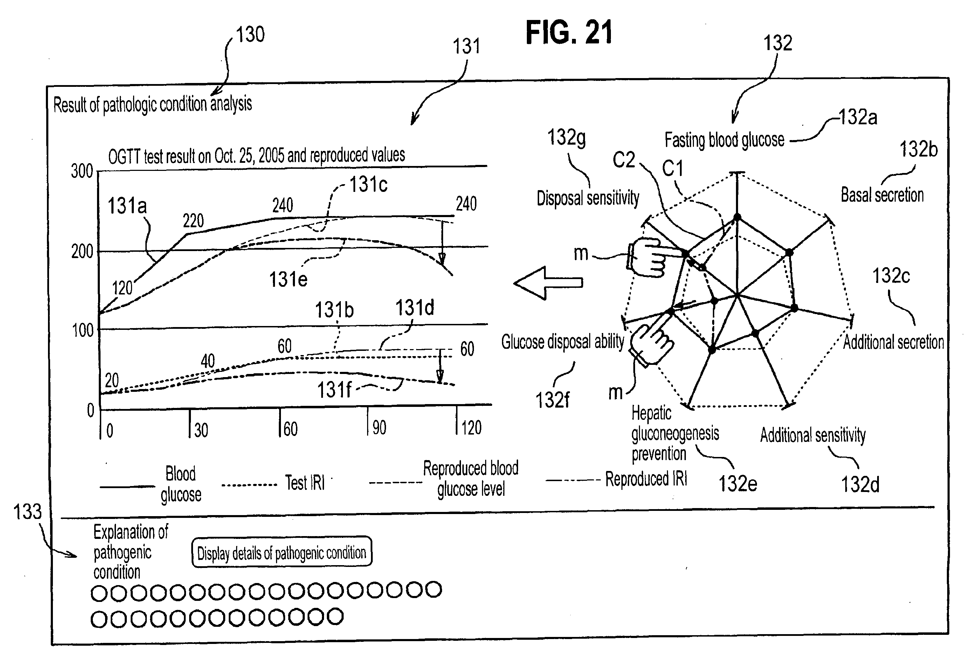

Fig. 21 shows a process of inputting pathologic condition characteristics information in the pathologic condition analysis result display part 130. Respective values of the indexes 132a-132g in the radar chart display 132 can be changed by operating a mouse pointer. In other words, the pathologic condition characteristics information may be inputted through an operation on the radar chart display 132. In Fig. 21, values of indexes of glucose processing ability 132f and processing sensitivity 132g are changed with a mouse pointer. As a result, a new radar chart C2 is obtained in which values of the glucose processing ability 132f and the processing sensitivity 132g are improved among the radar chart C1 of pathologic condition characteristics information generated by the system SS.

When values of indexes in the radar chart are changed, the simulated response acquiring section (biological model calculating section) calculates reproduced values of blood glucose level and insulin concentration, and reproduced values 131e, 131f in the changed pathologic condition are displayed.

That is, when the pathologic condition characteristics information is inputted, the system SS changes parameters of the biological model in correspondence with the inputted pathologic condition characteristics information and generates a new biological model. Then based on the biological model in which the inputted pathologic condition characteristics is reflected to parameters of the biological model, the simulated response acquiring section (biological model calculating section) makes calculation to determine reproduced values 131e, 131f which are simulated response.

As described above, since the system SS has a pathologic condition characteristics information input function, andanOGTT reproduced value output function based on the inputted pathologic condition characteristics information, one can ascertain beforehand an OGTT test result which is expected when the current pathologic condition is improved by therapy. Therefore, the physician can readily predict the therapeutic effect. By variously changing the pathologic condition characteristics information, one can ascertain which pathologic condition index should be improved to realize effective therapy, which is advantageous for establishment of appropriate therapeutic strategy.

In the present embodiment, input of the pathologic condition characteristics information is made on the radar chart, however, the manner of input is not particularly limited, and input may be made by numerical input.

### [Modified example of output of pathologic condition characteristics information]

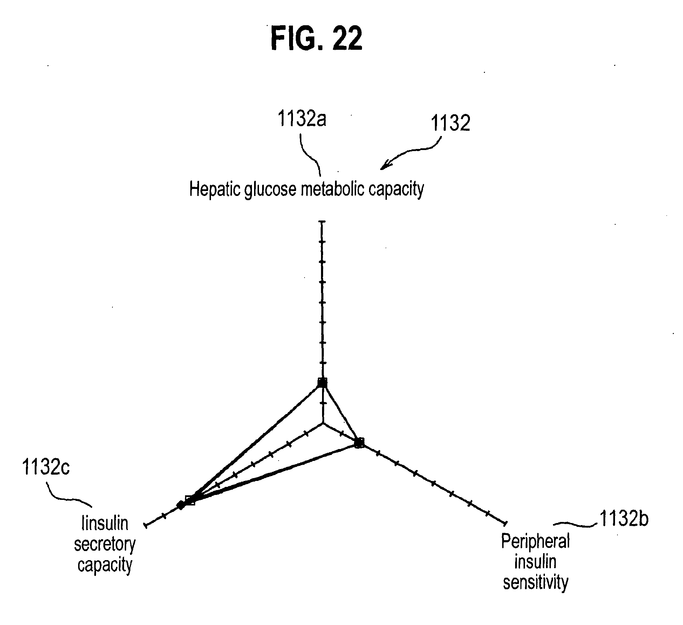

Fig. 22 shows a modified example of output of pathologic condition characteristics information. In the aforementioned radar chart 132, seven indexes were used, however, in Fig. 22, a radar chart 1132 having three indexes, hepatic glucose metabolism ability 1132a, insulin secretion ability 1132b, and peripheral insulin sensitivity 1132c is employed.

The present invention is not limited to the above embodiment, and various modifications are available. For example, the biological response information and the pathologic condition characteristics information, and other information may be outputted to media such as paper as well as to the screen display. Regarding the biological response information and the pathologic condition characteristics information, and other information, the input format and the output format may not be necessarily the same. For example, input of the biological response information (OGTT test result) in the above embodiment is achieved in a numerical input format, and output thereof is achieved in a graph output format. In this manner, formats of input and output may differ in the same information.

The foregoing detailed description and accompanying drawings have been provided by way of explanation and illustration, and are not intended to limit the scope of the appended claims. Many variations in the presently preferred embodiments illustrated herein will be obvious to one of ordinary skill in the art, and remain within the scope of the appended claims and their equivalents.

## Claims

1. A medical simulation system comprising:
biological response inputting means for receiving input of biological response information indicating biological response of a biological body;
biological model generating means for generating a biological model which generates a simulated response simulating the biological response;
pathologic condition characteristics acquiring means for acquiring pathologic condition characteristics information indicating pathologic condition characteristics of the biological body based on the generated biological model; and
outputting means for outputting the biological response information and the pathologic condition characteristics information.

2. The medical simulation system according to Claim 1, wherein
the outputting means outputs as the biological response information, a graph showing time course of the biological response.

3. The medical simulation system according to Claim 1 or 2, wherein
the outputting means outputs as the pathologic condition characteristics information, a radar chart having a plurality of indexes related to characteristics of pathologic condition.

4. The medical simulation system according to any of Claim 1 through 3, further comprising:
pathologic condition characteristics inputting means for receiving input of the pathologic condition characteristics information; and
simulated response acquiring means for generating a biological model reflecting the inputted pathologic condition characteristics and acquires simulated response information based on the biological model.

5. The medical simulation system according to any of Claim 1 through 4, wherein
the biological model is a model that simulates a pathological condition of diabetes.

6. The medical simulation system according to any of Claim 1 through 5, wherein
the biological model receives glucose intake amount as an input and outputs a blood glucose level and a blood insulin concentration.

7. The medical simulation system according to any of Claim 1 through 6, wherein
the biological model comprises a mathematical model including a plurality of parameters concerning biological functions, and
the pathologic condition characteristics acquiring means acquires pathologic condition characteristics information based on the parameters of the biological model.

8. A medical simulation system comprising:
pathologic condition characteristics inputting means for receiving input of pathologic condition characteristics information indicating characteristics of pathologic condition of a biological body;
simulated response acquiring means for generating a biological model reflecting the inputted characteristics of pathologic condition and acquiring simulated response information based on the biological model; and
outputting means for outputting the pathologic condition characteristics information and the simulated response information.

9. The medical simulation system according to Claim 8, wherein
the outputting means outputs as the simulated response information, a graph that shows time course of simulated response.

10. The medical simulation system according to Claim 8 or 9, wherein
the outputting means outputs as the pathologic condition characteristics information, a radar chart having a plurality of indexes related with characteristics of pathologic condition.

11. A computer program comprising:
a program code for receiving input of biological response information indicating biological response of a biological body by an input device;
a program code for generating a biological model for reproduction of a simulated response simulating the biological response;
a program code for acquiring pathologic condition characteristics information indicating characteristics of pathological condition of the biological body based on the biological model; and
a program code for displaying the biological response information and the pathologic condition characteristics information in a display.

12. The computer program according to Claim 11, wherein
the program code for displaying is configured to display as the biological response information, a graph showing time course of biological response.

13. The computer program according to Claim 11 or 12, wherein
the program code for displaying is configured to display as the pathologic condition characteristics information, a radar chart having a plurality of indexes related with characteristics of pathologic condition.

14. The computer program according to any Claim 11 through 13, further comprising:
a program code for receiving input of the pathologic condition characteristics information; and
a program code for generating a biological model reflecting the inputted characteristics of pathologic condition and acquiring simulated response information based on the biological model.

15. The computer program according to any Claim 11 through 14, wherein
the biological model is a model that simulates pathologic condition of diabetes.

16. The computer program according to any Claim 11 through 15, wherein
the biological model receives a glucose intake amount as input and outputs a blood glucose level and a blood insulin concentration.

17. The computer program according to any Claim 11 through 16, wherein
the biological model comprises a mathematical model including a plurality of parameters concerning biological functions,
the program code for acquiring acquires pathologic condition characteristics information based on the parameter of the biological model.

18. A computer program comprising:
a program code for receiving input of pathologic condition characteristics information indicating characteristics of pathological condition of a biological body by an input device;
a program code for generating a biological model reflecting the inputted characteristics of pathologic condition, and acquiring simulated response information based on the biological model; and
a program code for displaying the pathologic condition characteristics information and the simulated response information in a display.

19. The computer program according to Claim 18, wherein
the program code for displaying is configured to output as the simulated response information, a graph showing time course of simulated response.

20. The computer program according to Claim 18 or 19, wherein
the program code for displaying is configured to output as the pathologic condition characteristics information, a radar chart having a plurality of indexes related with characteristics of pathologic condition.
